# EUROPÄISCHE PATENTSCHRIFT

(11) **EP 2 271 853 B1**
(45) Veröffentlichungstag und Bekanntmachung des Hinweises auf die Patenterteilung: **09.10.2013**
(21) Anmeldenummer: 09728208.1
(22) Anmeldetag: 31.03.2009
(51) Int. Cl.: F16D 3/74

(54) **ELASTISCHE WELLENKUPPLUNG**
ELASTIC SHAFT COUPLING
ACCOUPLEMENT ÉLASTIQUE POUR ARBRE

(30) Priorität: 31.03.2008 DE 102008016700
(43) Veröffentlichungstag der Anmeldung: 12.01.2011
(73) Patentinhaber: Hackforth GmbH, 44653 Herne (DE)
(72) Erfinder: BUSCH, Wolfgang, 45888 Gelsenkirchen (DE)
(74) Vertreter: Thiel, Christian
(86) Internationale Anmeldenummer: PCT/EP2009/002360
(87) Internationale Veröffentlichungsnummer: WO 2009/121574

(56) Entgegenhaltungen:
- EP-A- 1 164 305
- WO-A-01/36834
- DE-A1- 2 727 963
- DE-A1- 4 305 625
- DE-A1- 10 236 295
- DE-A1- 19 821 948

## Beschreibung

Die Erfindung betrifft eine elastische Wellenkupplung mit wenigstens einem in Umfangsrichtung segmentierten Torsionselement, wobei wenigstens ein Segment des Torsionselements als Übertragungselement einen im Querschnitt im Wesentlichen V-förmigen Elastomerkörper aufweist, der mit antriebs- und abtriebsseitigen Anschlussflanschen verbunden ist.

Bei solchen Wellenkupplungen erfolgt die Drehmomentübertragung über die Elastomerkörper, die hierzu aus geeignetem Gummimaterial gefertigt werden. Zur Einleitung der Drehmomente in die Elastomerkörper sind üblicherweise auf den axialen Stirnflächen der Elastomerkörper antriebs- und abtriebsseitig metallische Anschlussflansche unlösbar angebracht. Die Verbindung zwischen den Elastomerkörpern und den zugehörigen Anschlussflanschen erhält man zumeist durch Anvulkanisieren.

Wellenkupplungen der zuvor beschriebenen Art haben auch die Funktion, Drehschwingungen in Antriebssträngen zu dämpfen. Darüber hinaus gleichen sie radialen und axialen Versatz einzelner Abschnitte des Antriebsstrangs zueinander aus.

Bekannt ist es, bei elastischen Wellenkupplungen das Torsionselement in Umfangsrichtung segmentiert auszubilden. Gegenüber ringförmig in Umfangsrichtung durchgehenden Torsionselementen und zugehörigen Elastomerkörpern haben segmentierte Torsionselemente verschiedene Vorteile. So ergeben sich zusätzliche konstruktionstechnische Freiheitsgrade. Die Fertigung kleinerer aus Flanschen und Elastomerkörpern bestehender Übertragungselemente ist hinsichtlich der Vulkanisation einfacher und kostengünstiger. Außerdem lassen sich groß dimensionierte Wellenkupplungen mit segmentierten Torsionselementen einfacher montieren.

Die in Umfangsrichtung segmentierten Elastomerkörper der bekannten elastischen Wellenkupplungen haben eine im Querschnitt im Wesentlichen V-förmige Gestalt, wobei der Scheitelpunkt der V-Form auf der Mittelachse der Wellenkupplung liegt. Bei dieser Geometrie nimmt die Materialstärke des Elastomerkörpers proportional zum wachsenden radialen Abschnitt von der Mittelachse der Wellenkupplung zu. Auf diese Weise wird eine gleichmäßige Spannungsverteilung innerhalb des Elastomerkörpers über dessen gesamtes Volumen gewährleistet.

Üblicherweise müssen elastische Wellenkupplung individuell ausgelegt werden, damit deren Eigenschaften an den jeweiligen Antriebsstrang optimal angepasst sind. Anzupassende Parameter von elastischen Wellenkupplungen sind z. B. die übertragbare Leistung, die Torsionssteifigkeit, die axiale Steifigkeit usw. Die Individualisierung beginnt häufig bereits auf Konstruktionsebene. Der mit der Individualisierung zusammenhängende Aufwand führt somit nachteiligerweise zu hohen Kosten.

Die deutsche Offenlegungsschrift DE 198 21 948 A1 zeigt eine elastische Wellenkupplung mit mehreren radial zueinander angeordneten ringförmigen oder wahlweise auch segmentförmigen Gummielementen, welche in einer in der Kupplungsachse verlaufenden Ebene radial nach außen breiter werden, entweder proportional mit einem V-förmigen Querschnitt, oder überproportional mit einem tulpenförmigen Querschnitt, wodurch sich die Kühleigenschaften einstellen lassen, insbesondere in Verbindung mit der radialen Erstreckung der einzelnen Gummielemente. Es ist zwecks breiterem Einsatzgebiet möglich, die Gummielemente in radialer Richtung zu kaskadieren, indem jeweils ein von einem Anschlussflansch umschlossenes Gummielement über den

Anschlussflansch radial innen oder außen mit einem weiteren Anschlussflansch mit Gummielement gekoppelt wird, wobei die Gummielemente unterschiedlich groß ausgebildet sind.

Vor diesem Hintergrund ist es Aufgabe der Erfindung, eine elastische Wellen-kupplung bereitzustellen, die eine individuelle Auslegung zu geringen Kosten ermöglicht.

Diese Aufgabe löst die Erfindung ausgehend von einer elastischen Wellenkupplung der eingangs genannten Art dadurch, dass der Scheitelpunkt der im Querschnitt senkrecht zur Mittelachse angeordneten v-Form des Elastomerkörpers außerhalb der Mittelachse der Wellenkupplung liegt und dass die antriebs- und abtriebsseitigen Oberflächen des Elastomerkörpers Kegelflächen jeweils eines geraden Kreiskegels sind, die einen gemeinsamen Scheitelpunkt haben, wobei der Scheitelpunkt der V-Form mit dem Scheitelpunkt der Kegelflächen Übereinstimmt.

Die Erfindung basiert auf der Erkenntnis, dass es tolerierbar ist, wenn der Scheitelpunkt der V-Form des Elastomerkörpers (in gewissen Grenzen) außerhalb der Mittelachse der Wellenkupplung liegt. Eine vollständig gleichmäßige Spannungsverteilung ist zwar nicht mehr gewährleistet. Dies kann allerdings zu Gunsten geringerer Herstellungskosten in Kauf genommen werden. Die Erfindung ermöglicht es nämlich, standardisierte Übertragungs-elemente zu verwenden, und zwar für Wellenkupplungen, bei denen die Übertragungselemente in unterschiedlichem Abstand zur Mittelachse angeordnet sind. Die Zahl der Übertragungselemente und deren Abstand von der Mittelachse kann je nach gewünschter Auslegung frei gewählt werden. Das Ergebnis ist ein modulares Kupplungskonzept, welches eine Auslegung nach Kundenwunsch auf Basis standardisierter Teile ermöglicht. Die Individualisierung ist durch die Erfindung gleichsam von der Konstruktionsebene auf die Montageebene verlagert. Auf diese Weise lassen sich die Herstellungskosten drastisch reduzieren.

Bei der erfindungsgemäßen Geometrie des Elastomerkörpers ist immerhin eine weitgehend gleichmäßige Spannungsverteilung, zumindest in Umfangsrichtung, gewährleistet. Da sich die Scheitelpunkte der Kegelflächen gemäß der Erfindung außerhalb der Mittelachse der Wellenkupplung befinden, kommt es zu (geringfügigen) Unterschieden in der Spannungsverteilung in radialer Richtung. Diese können jedoch in Grenzen toleriert werden. Die Geometrie, bei welcher die Kegelflächen der antriebs- und abtriebsseitigen Oberflächen des Elastomerkörpers einen gemeinsamen Scheitelpunkt haben, ist dabei besonders sinnvoll im Hinblick auf die Spannungsverteilung im Elastomerkörper. Vorteilhaft ist auch, dass die standardisierten Übertragungselemente der erfindungsgemäßen elastischen Wellenkupplung auch für eine herkömmliche Kupplung verwendet werden können, bei welcher der Scheitelpunkt genau auf der Mittelachse liegt, falls eine vollkommen gleichmäßige Spannungsverteilung innerhalb des Elastomerkörpers gewünscht ist.

Gemäß einer praktischen Realisierung der Erfindung, sind die Anschlussflansche als an die Oberflächenform des Elastomerkörpers angepasste Bleche ausgebildet, an welche der Elastomerkörper anvulkanisiert ist. Diese Ausgestaltung ermöglicht eine flächige Einleitung der Drehmomente in den Elastomerkörper über dessen axiale Stirnflächen. Die Elastomerkörper mit anvulkanisierten Anschlussflanschen bilden die standardisierten Übertragungselemente als Grundmodule der erfindungsgemäßen elastischen Wellenkupplung. Diese Elastomer-/Metall-Module können in einheitlicher Geometrie und Größe für elastische Wellenkupplungen mit unterschiedlichen physikalischen Eigenschaften verwendet werden.

Die Bleche können in der Draufsicht im Wesentlichen trapezförmig ausgebildet sein. Die Elastomerkörper haben in diesem Fall ebenfalls eine trapezförmige Gestalt. Bei dieser Formgebung lässt sich ein optimales Volumen zur Unterbringung der Elastomerkörper ausnutzen. Die Formgebung ermöglicht, anders ausgedrückt, eine maximale Anzahl von Segmenten des Torsionselements in Umfangsrichtung anzuordnen.

Sinnvollerweise sind die Bleche der Anschlussflansche in ihren Randbereichen mit einer antriebsseitigen und einer abtriebsseitigen mechanischen Schnittstelle zum Anschließen der Wellenkupplung an benachbarte Maschinenelemente verbunden. Diese Schnittstelle kann in unterschiedlichster Weise ausgebildet sein. Eine besonders einfache Realisierung kann darin bestehen, dass ein antriebsseitiger und ein abtriebsseitiger Ring vorgesehen sind, die entlang ihres Umfangs mit den antriebs- und antriebsseitigen Anschlussflanschen der Übertragungselemente verschraubt werden.

Das erfindungsgemäße modulare Kupplungskonzept ermöglicht es, elastische Wellenkupplungen mit unterschiedlichem Umfang zu realisieren. Je nach Umfang sind zwei oder mehr Segmente des Torsionselements in Umfangsrichtung voneinander beabstandet oder grenzen direkt aneinander an. Der Umfang wirkt sich auf die Eigenschaften der elastischen Wellenkupplung aus. Bei gleichem Drehmoment wirkt auf die Elastomerkörper einer Kupplung mit kleinerem Umfang eine größere Spannung ein als bei einer Kupplung mit größerem Umfang. Entsprechend unterschiedlich ist die Torsionssteifigkeit.

Unter dynamischer Last, d. h. bei Übertragung zeitlich veränderlicher Drehmomente, wie sie beispielsweise durch Drehmomentspitzen bei Dieselmotoren vorliegen, erfahren die Übertragungselemente eine gleichfalls zeitlich veränderliche Tordierung. Durch diese dynamische Belastung fällt infolge innerer Reibung bei der Verformung der Elastomerkörper Verlustwärme an. Da die Belastbarkeit selbst der leistungsfähigsten Elastomerwerkstoffe mit ansteigender Temperatur abnimmt, sind effiziente Maßnahmen zur Kühlung sinnvoll. Zu diesem Zweck kann bei der erfindungsgemäßen elastischen Wellenkupplung vorgesehen sein, dass der Elastomerkörper wenigstens einen im Wesentlichen radial verlaufenden Kühlluftkanal aufweist. Durch die Drehbewegung der Kupplung wird Kühlluft durch die radial orientierten Kühlluftkanäle gefördert. Dadurch wird die entstehende Verlustwärme abgeführt.

Ausführungsbeispiele der Erfindung werden im Folgenden anhand der Zeichnungen näher erläutert. Es zeigen:
- Fig. 1: erfindungsgemäße elastische Wellenkupplungen mit unterschiedlichem Durchmesser in Draufsicht;
- Fig. 2: Schnittdarstellung der Ausführungsbeispiele gemäß Fig. 1;
- Fig. 3: Übertragungselement der erfindungsgemäßen elastischen Wellenkupplung in Draufsicht;
- Fig. 4: Schnittdarstellung des Übertragungselements gemäß Fig. 3.

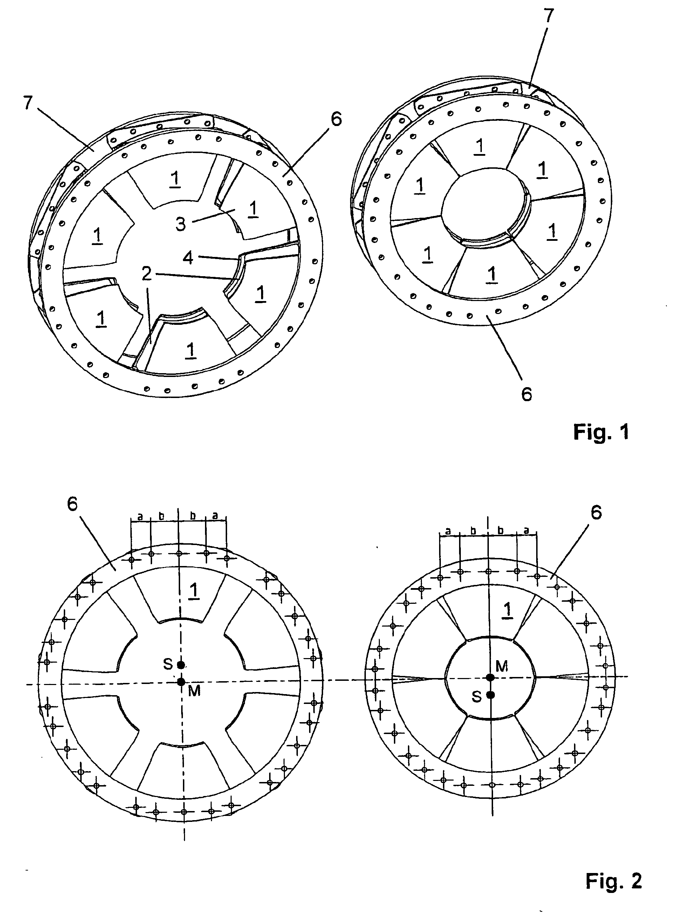

Die in den Fig. 1 und 2 gezeigten elastischen Wellenkupplungen weisen jeweils ein Torsionselement auf, das aus sechs Segmenten besteht. Die Segmente sind unter konstantem Winkelabstand in Umfangsrichtung nebeneinander angeordnet. Die in den Fig. 1 und 2 jeweils links dargestellte elastische Wellenkupplung hat einen größeren Durchmesser als die rechts dargestellte Wellenkupplung bei gleicher Anzahl von Segmenten des Torsionselements. Bei der links dargestellten elastischen Wellenkupplung sind die einzelnen Segmente in Umfangsrichtung voneinander beabstandet. Bei dem rechts dargestellten Ausführungsbeispiel grenzen die Segmente unmittelbar aneinander an.

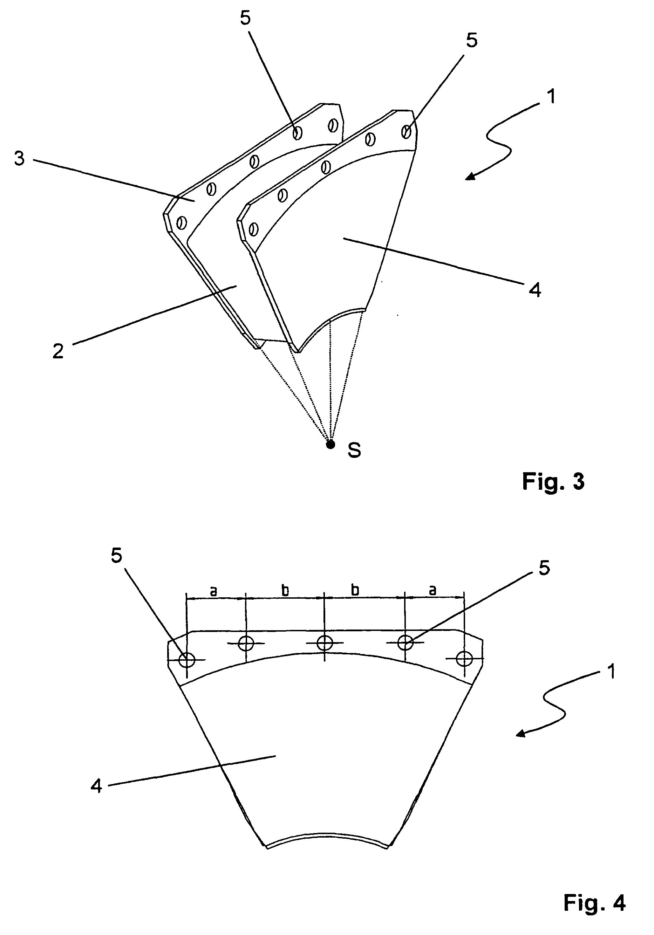

Die Segmente des Torsionselements sind durch Übertragungselemente 1 gebildet. Jedes der Übertragungselemente 1 besteht, wie in der Fig. 3 zu sehen ist, aus einem im Wesentlichen V-förmigen Elastomerkörper 2, der an antriebsund abtriebsseitige Anschlussflansche 3 bzw. 4 anvulkanisiert ist. Die antriebsund abtriebsseitigen Oberflächen des Elastomerkörpers 2 sind Kegelflächen jeweils eines geraden Kreiskegels, wobei die Kegelflächen einen gemeinsamen Scheitelpunkt S haben.

Die Fig. 2 zeigt, dass der Scheitelpunkt S außerhalb der Mittelachse M (senkrecht zur Zeichnungsebene verlaufend) der Wellenkupplung liegt. In der Fig. 2 ist aus Gründen der Übersichtlichkeit der Scheitelpunkt S nur für das obere mittlere Übertragungselement 1 des Torsionselements eingezeichnet. Bei dem linken Ausführungsbeispiel (großer Durchmesser) liegt der Scheitelpunkt S oberhalb der Mittelachse M. Bei dem rechten Ausführungsbeispiel (kleiner Durchmesser) liegt der Scheitelpunkt unterhalb der Mittelachse M.

Wie die Fig.1 und 2 zeigen, lassen sich mit den standardisierten Übertragungselementen 1 unterschiedlich dimensionierte elastische Wellenkupplungen realisieren. Die Wellenkupplungen haben entsprechend ihrem unterschiedlichen Durchmesser unterschiedliche physikalische Eigenschaften hinsichtlich der Drehmomentübertragung.

Die Anschlussflansche 3 und 4 sind bei den dargestellten Ausführungsbeispielen als an die Oberflächenform des Elastomerkörpers 2 angepasste Bleche ausgebildet, an welche der Elastomerkörper 2 anvulkanisiert ist. Die Bleche weisen in ihren Randbereichen Bohrungen 5 auf. Diese Bohrungen dienen zum Verschrauben mit antriebs- und abtriebsseitigen Ringen 6 bzw. 7. Die Ringe 6 und 7 bilden antriebsseitige und abtriebsseitige mechanische Schnittstellen zum Anschließen der Wellenkupplung an benachbarte Maschinenelemente, beispielsweise an einen Dieselmotor bzw. einen Generator (nicht dargestellt).

Wie die Fig. 4 zeigt, sind die Bleche 3, 4 in der Draufsicht im Wesentlichen trapezförmig ausgebildet. Dadurch lässt sich, wie die Fig. 1 und 2 zeigen, eine maximale Anzahl von Übertragungselementen 1 in Umfangsrichtung unterbringen.

## Patentansprüche

1. Elastische Wellenkupplung mit wenigstens einem in Umfangsrichtung segmentierten Torsionselement, wobei wenigstens ein Segment des Torsionselements als Übertragungselement (1) einen im Querschnitt im Wesentlichen V-förmigen Elastomerkörper (2) aufweist, der mit antriebs- und abtriebsseitigen Anschlussflanschen (3, 4) verbunden ist,
**dadurch gekennzeichnet,**
**dass** der Scheitelpunkt (S) der im Querschnitt senkrecht zur Mittelachse (M) angeordneten V-Form des Elastomerkörpers (2) außerhalb der Mittelachse (M) der Wellenkupplung liegt und dass die antriebs- und abtriebsseitigen Oberflächen des Elastomerkörpers (2) Kegelflächen jeweils eines geraden Kreiskegels sind, wobei die Kegelflächen der antriebs- und abtriebsseitigen Oberflächen einen gemeinsamen Scheitelpunkt (S) haben, wobei der Scheitelpunkt (S) der V-Form mit dem Scheitelpunkt (S) der Kegelflächen Übereinstimmt.

2. Elastische Wellenkupplung nach Anspruch 1 , **dadurch gekennzeichnet, dass** die Anschlussflansche (3, 4) als an die Oberflächenform des Elastomerkörpers (2) angepasste Bleche ausgebildet sind, an welche der Elastomerkörper (2) anvulkanisiert ist.

3. Elastische Wellenkupplung nach Anspruch 2, **dadurch gekennzeichnet, dass** die Bleche in der Draufsicht im Wesentlichen trapezförmig ausgebildet sind.

4. Elastische Wellenkupplung nach Anspruch 2 oder 3, **dadurch gekennzeichnet, dass** die Bleche in ihren Randbereichen mit einer antriebsseitigen und einer abtriebsseitigen mechanischen Schnittstelle (6, 7) zum Anschließen der Wellenkupplung an benachbarte Maschinenelemente verbunden sind.

5. Elastische Wellenkupplung nach einem der Ansprüche 1 bis 4, **dadurch gekennzeichnet, dass** zwei oder mehr Segmente des Torsionselements in Umfangsrichtung voneinander beabstandet sind.

6. Elastische Wellenkupplung nach einem der Ansprüche 1 bis 4, **dadurch gekennzeichnet, dass** zwei oder mehr Segmente des Torsionselements in Umfangsrichtung aneinander angrenzen.

7. Elastische Wellenkupplung nach einem der Ansprüche 1 bis 6, **dadurch gekennzeichnet, dass** der Elastomerkörper (2) wenigstens einen im Wesentlichen radial verlaufenden Kühlluftkanal aufweist.

## Claims

1. An elastic shaft coupling comprising at least one torsion element segmented in the peripheral direction, wherein at least one segment of the torsion element as a transmission element (1) has an elastomer body (2) which is substantially V-shaped in cross-section and which is connected to connecting flanges (3, 4) at the drive input and output sides, **characterised in that** the apex (S) of the V-shape arranged perpendicularly to the central axis (M) in the cross-section of the elastomer body (2) lies outside the central axis (M) of the shaft coupling and that the surfaces of the elastomer body (2), at the drive input and output sides, are conical surfaces of a respective right circular cone, wherein the conical surfaces of the surfaces at the drive input and output side have a common apex (S), wherein the apex (S) of the V-shape coincides with the apex (S) of the conical surfaces.

2. An elastic shaft coupling according to claim 1 **characterised in that** the connecting flanges (3, 4) are in the form of plates which are adapted to the surface shape of the elastomer body (2) and to which the elastomer body (2) is vulcanised.

3. An elastic shaft coupling according to claim 2 **characterised in that** in plan view the plates are substantially trapezoidal.

4. An elastic shaft coupling according to claim 2 or claim 3 **characterised in that** in their edge regions the plates are connected to a mechanical interface (6, 7) at the drive input side and at the drive output side for connection of the shaft coupling to adjacent machine components.

5. An elastic shaft coupling according to one of claims 1 to 4 **characterised in that** two or more segments of the torsion element are spaced from each other in the peripheral direction.

6. An elastic shaft coupling according to one of claims 1 to 4 **characterised in that** two or more segments of the torsion element adjoin each other in the peripheral direction.

7. An elastic shaft coupling according to one of claims 1 to 6 **characterised in that** the elastomer body (2) has at least one substantially radially extending cooling air passage.

## Revendications

1. Dispositif d'accouplement élastique avec au moins un élément de torsion divisé en segments dans le sens du pourtour du dispositif, où au moins un segment de l'élément de torsion comprend un corps élastomère (2) avec une section transversale en forme de V et servant comme élément de transmission (1) et qui comporte aux côtés menant et mené des brides de raccordement (3, 4),
**caractérisé en ce que** le sommet (S) de la forme en V disposé, en tant que section transversale, perpendiculairement à l'axe (M) du dispositif d'accouplement, est disposé en dehors de l'axe (M) et **en ce que** les surfaces du corps élastomère (2) des côtés menant et mené sont chacune des surfaces d'un cône droit, les surfaces de cône des côtés menant et mené ayant un sommet commun (S), le sommet (S) de la forme en V étant identique au sommet (S) des surface de cône.

2. Dispositif d'accouplement élastique selon la revendication 1, **caractérisé en ce que** les brides de raccordement (3, 4) sont formées comme des tôles adaptées à la forme de surface du corps élastomère (2) auxquelles le corps élastomère (2) est fixé par vulcanisation.

3. Dispositif d'accouplement élastique selon la revendication 2, **caractérisé en ce que** les tôles ont une forme, en vue de dessus, essentiellement trapézoïdale.

4. Dispositif d'accouplement élastique selon la revendication 2 ou 3, **caractérisé en ce que** les tôles sont pourvues à leurs zones de bord, d'une interface mécanique (6, 7) respectivement menant et mené pour raccorder le dispositif d'accouplement à des éléments de machine avoisinants.

5. Dispositif d'accouplement élastique selon l'une des revendications 1 à 4, **caractérisé en ce que** deux segments ou plus de l'élément de torsion sont espacés l'un de l'autre dans le sens du pourtour.

6. Dispositif d'accouplement élastique selon l'une des revendications 1 à 4, **caractérisé en ce que** deux segments ou plus de l'élément de torsion sont adjacents l'un de l'autre dans le sens du pourtour.

7. Dispositif d'accouplement élastique selon l'une des revendications 1 à 6, **caractérisé en ce que** le corps élastomère (2) comporte au moins un canal pour air de refroidissement s'étendant essentiellement dans le sens radial.
